# EUROPÄISCHE PATENTSCHRIFT

(11) **EP 3 712 041 B1**
(45) Veröffentlichungstag und Bekanntmachung des Hinweises auf die Patenterteilung: **19.01.2022**
(21) Anmeldenummer: 19163913.7
(22) Anmeldetag: 19.03.2019
(51) Int. Cl.: B62D 25/00, B62D 29/00

(54) **VERSTÄRKUNGSELEMENT**
REINFORCING ELEMENT
ÉLÉMENT DE RENFORT

(43) Veröffentlichungstag der Anmeldung: 23.09.2020
(73) Patentinhaber: SIKA TECHNOLOGY AG, 6340 Baar (CH)
(72) Erfinder: BENOUALI, Hakim, 1170 watermael-Boitsfort (BE); CAUCHIE, Patrick, 1480 Rebecq (BE); MARCQ, Dimitri, 1480 Tubize (BE)
(74) Vertreter: Sika Patent Attorneys

(56) Entgegenhaltungen:
- EP-A1- 2 401 191
- EP-B1- 2 401 191
- WO-A1-2018/192946
- DE-A1-102013 015 883
- JP-A- 2005 319 662
- US-A- 4 732 806

## Beschreibung

Die Erfindung betrifft ein Verstärkungselement zur Verstärkung von Strukturelementen in Fahrzeugen, sowie ein System eines verstärkten Strukturelements mit einem Strukturelement und einem darin angeordneten Verstärkungselement.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (englisch: baffle) verwendet, um Hohlräume abzudichten und/oder akustisch abzuschotten, oder Verstärkungselemente (englisch: reinforcer) verwendet, um Hohlräume zu verstärken.

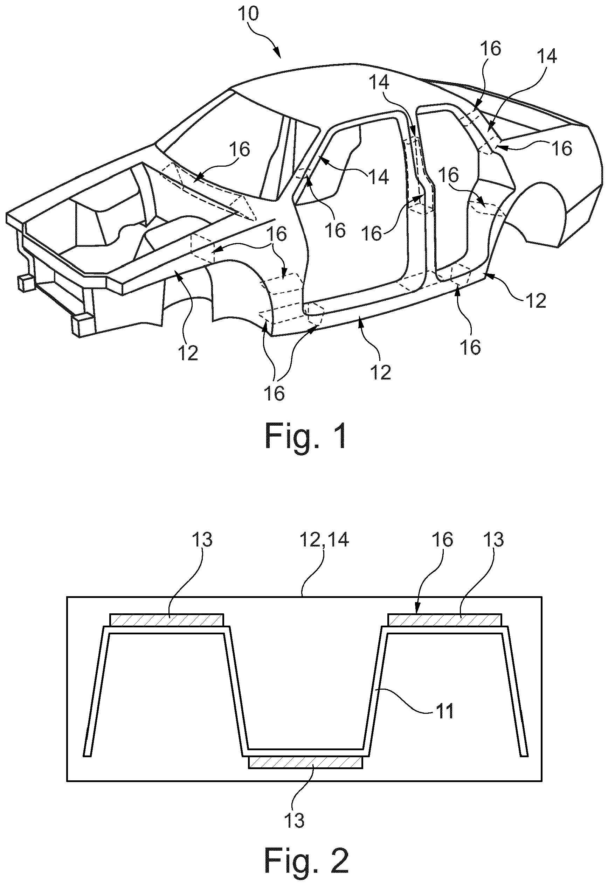

In Fig. 1 ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12, auf. Solche Strukturelemente 12, 14 mit Hohlräumen werden üblicherweise mit Abdichtungs- und/oder Verstärkungselementen 16 abgedichtet bzw. verstärkt.

In Fig. 2 ist schematisch ein bekanntes Konzept zum Verstärken von solchen Strukturelementen mit Hohlräumen in Kraftfahrzeugen dargestellt. Dabei zeigt die Fig. 2 ein Verstärkungselement 16 in einem Strukturelement 12, 14 vor einer Expansion eines expandierbaren Materials 13. In diesem Beispiel ist das expandierbare Material 13 auf Oberflächen eines Trägers 11 angeordnet, welche in einer Nähe zum Strukturelement 12, 14 angeordnet sind. Der Träger 11 weist in diesem Ausführungsbeispiel einen M- bzw. W-förmigen Querschnitt auf. Dadurch wird eine Steifigkeit des Trägers 11 erhöht.

Eine Oberfläche des Trägers 11, welche jeweils einer Innenseite des Strukturelementes 12, 14 zugewandt ist, weist typischerweise eine schachbrettartige Form auf. Dabei kann das Verbindungsmaterial bzw. das expandierbare Material 13 jeweils nur auf Flächen angeordnet werden, welche in der Nähe des Strukturelementes 12, 14 angeordnet sind. Ein ähnliches Verstärkungselement wird in der EP 2401191A1 gezeigt.

Nachteilig an solchen und ähnlichen bekannten Verstärkungselementen bzw. Systemen ist es, dass durch die Expansion des expandierbaren Materials eine Schwächung der mechanischen Stabilität des Systems stattfindet. Dies ist beispielsweise in Bereichen von crashrelevanten Strukturen von grosser Bedeutung, da für solche Anwendungen eine höchstmögliche mechanische Stabilität wünschenswert ist.

Der Erfindung liegt daher die Aufgabe zugrunde, ein verbessertes Verstärkungselement zur Verfügung zu stellen, welches eine verbesserte mechanische Stabilität aufweist. Zudem soll das erfindungsgemässe Verstärkungselement einfach und effizient in Fahrzeuge verbaut werden können.

Diese Aufgabe wird gelöst durch ein Verstärkungselement zur Verstärkung von Strukturelementen in Fahrzeugen, das Verstärkungselement umfassend: einen Träger mit zumindest einem Reservoir, wobei das Reservoir zumindest eine Auslassöffnung hat; einen Klebstoff, welcher im Reservoir angeordnet ist; und zumindest ein Austragselement mit einem Trennelement und einem Vortriebselement, wobei das Trennelement im Reservoir angeordnet ist und den Klebstoff vom Vortriebselement trennt, und wobei das Trennelement im Wesentlichen gegenüber der Auslassöffhung angeordnet ist; wobei bei einer Betätigung des Vortriebselements das Trennelement durch das Reservoir bewegt wird, so dass der Klebstoff durch die Auslassöffhung aus dem Reservoir ausgetragen wird.

Diese Lösung hat den Vorteil, dass dadurch ein Klebstoff verwendet werden kann, welcher nicht expandiert werden muss, um einen Abstand zwischen dem Träger und dem Strukturelement zu überbrücken. Somit können Klebstoffe verwendet werden, welche zu einer höheren mechanischen Stabilität des verstärkten Systems führen. Durch das Anordnen des Klebstoffs in einem Reservoir ist das Verstärkungselement zudem einfach in der Handhabung. Das Verstärkungselement kann daher einfach transportiert und manipuliert werden, ohne dass dabei unerwünschter Kontakt zum Klebstoff hergestellt wird.

Ein Kerngedanke der vorliegenden Erfindung besteht darin, dass durch das Vorsehen eines Austragselements ein Mechanismus zur Verfügung gestellt wird, welcher den Klebstoff aus dem Reservoir austragen kann und in eine gewünschte Verwendungsposition zwischen dem Träger und dem Strukturelement einbringen kann. Da das Austragselement beispielsweise durch erhöhte Temperatur aktivierbar ausgestaltet werden kann, kann das hier vorgeschlagene Verstärkungselement genau gleich im Herstellungsprozess von Fahrzeugen verwendet werden, wie dies mit herkömmlichen Verstärkungselementen der Fall war. Es sind somit keinerlei Anpassungen am Herstellungsverfahren von Fahrzeug notwendig.

Bei der Betätigung des Vortriebselements wird der Klebstoff durch die Auslassöffhung aus dem Reservoir ausgetragen und in einen Bereich zwischen dem Träger und dem Strukturelement eingebracht, um das Verstärkungselement mit dem Strukturelement zu verkleben.

In einer beispielhaften Ausführungsform ist das Reservoir in einem Inneren des Trägers angeordnet.

Eine solche Anordnung des Reservoirs hat den Vorteil, dass dadurch der Klebstoff bestmöglich geschützt ist während eines Transports oder während einer Manipulation des Verstärkungselements. Weiterhin bietet eine solche Anordnung des Reservoirs im Inneren des Trägers den Vorteil, dass dadurch viele äussere Flächen bzw. Wände des Trägers realisierbar sind, mit welchen das Verstärkungselement mit dem Strukturelement verklebt werden kann. Je grösser eine Verklebungsfläche zwischen Verstärkungselement und Strukturelement ist, desto besser kann eine mechanische Stabilität des gesamten Systems verbessert werden.

In einer beispielhaften Ausführungsform verläuft eine Bewegungsrichtung des Trennelements orthogonal zu einer Längsachse des Trägers.

Eine solche Ausrichtung des Reservoirs im Träger hat sich als vorteilhaft erwiesen, weil dadurch der Klebstoff möglichst effizient in die gewünschten Bereiche ausgetragen werden kann, welche typischerweise Wände bzw. Aussenflächen von dem Träger darstellen, die sich entlang der Längsachse des Trägers erstrecken.

In einer beispielhaften Ausführungsform hat das Reservoir entlang der Bewegungsrichtung des Trennelements einen im Wesentlichen konstanten Querschnitt.

Dabei kann sich der Querschnitt des Reservoirs entlang der Bewegungsrichtung des Trennelementes leicht verändern (z.B. vergrössern oder verkleiner), insbesondere dann, wenn der Träger durch ein Spritzgussverfahren hergestellt wird. Um den Träger vom Spritzgusswerkzeug entformen zu können, ist es oftmals nötig, die Wände des Reservoirs mit einer Entformungsschräge zu versehen.

In einer beispielhaften Weiterbildung ist der konstante Querschnitt des Reservoirs viereckig oder rechteckig oder vieleckig oder oval oder rund oder unregelmässig geformt.

In einer beispielhaften Ausführungsform hat der Träger zwischen 1 und 20, oder zwischen 2 und 20, oder zwischen 3 und 20 Reservoire.

Je nach Grösse des Verstärkungselements kann es vorteilhaft sein, mehr als ein Reservoir vorzusehen. Beispielsweise können für grössere Verstärkungselemente mehr Reservoire eingesetzt werden als für kleinere Verstärkungselemente.

Der Träger kann aus beliebigen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone, welche insbesondere auch geschäumt sind; Metalle, insbesondere Aluminium und Stahl; oder gewachsene organische Materialien, insbesondere Holz- oder andere (gepresste) Faserwerkstoffe oder glasartige oder keramische Materialien; speziell auch geschäumte Materialien dieser Art; oder beliebige Kombinationen dieser Materialien. Besonders bevorzugt wird Polyamid, insbesondere Polyamid 6, Polyamid 6,6, Polyamid 11, Polyamid 12 oder ein Gemisch davon verwendet. Auch Kombinationen mit Fasern, wie beispielsweise Glasfasern oder Karbonfasern, sind möglich.

Weiterhin kann der Träger einen beliebigen Aufbau und eine beliebige Struktur aufweisen. Er kann beispielsweise massiv, hohl, oder geschäumt sein oder eine gitterartige Struktur aufweisen. Die Oberfläche des Trägers kann typischerweise glatt, rau oder strukturiert sein.

In einer beispielhaften Ausführungsform ist das Trennelement starr ausgebildet.

Eine starre Ausbildung des Trennelements hat den Vorteil, dass dadurch das Vortriebselement auch ungleichmässig auf das Trennelement einwirken kann, um den Klebstoff aus dem Reservoir auszutragen.

In einer beispielhaften Ausführungsform ist das Trennelement aus Kunststoff oder aus Metall oder aus einer Mischung von Kunststoff und Metall ausgebildet.

In einer beispielhaften Ausführungsform ist das Trennelement im Wesentlichen flach.

In einer beispielhaften Ausführungsform hat das Trennelement eine Dicke, gemessen entlang der Bewegungsrichtung des Trennelements von 0,5 bis 5 mm, bevorzugt von 1 bis 4 mm, besonders bevorzugt von 1,5 bis 3 mm.

In einer alternativen Ausführungsform ist das Trennelement flexibel ausgebildet.

Eine solche flexible Ausbildung des Trennelements kann beispielsweise dann ausreichend sein, wenn das Vortriebselement so ausgestaltet ist, dass eine Kraft des Vortriebselements gleichmässig auf die Fläche des Trennelements einwirkt.

In einer beispielhaften Weiterbildung ist das flexible Trennelement als Folie ausgebildet.

In einer beispielhaften Weiterbildung ist die Folie aus Metall, insbesondere Aluminium, oder aus einem polymeren Kunststoff, insbesondere Teflon, gebildet.

In einer beispielhaften Ausführungsform hat die Folie eine Dicke, gemessen entlang der Bewegungsrichtung des Trennelements von 0,005 bis 0.50 mm, bevorzugt von 0.01 bis 0.40 mm, bevorzugt von 0.05 bis 0.30 mm, besonders bevorzugt von 0.10 bis 0.25 mm.

In einer beispielhaften Ausführungsform umfasst das Vortriebselement ein expandierbares Material.

Die Verwendung von solchen expandierbaren Materialien hat den Vorteil, dass dadurch ein zuverlässiges wärmeinduziertes System verwendet werden kann, um eine im Wesentlichen gleichmässige Kraft auf das Trennelement auszuüben.

Geeignete expandierbare Materialien werden beispielsweise unter dem Handelsnamen SikaBaffle^{®} 240, SikaBaffle^{®} 250 oder SikaBaffle^{®} 255 von der Sika Corp., USA, vertrieben und sind in den Patenten US 5,266,133 und US 5,373,027 beschrieben.

In einer beispielhaften Ausführungsform hat das expandierbare Material eine Expansionsrate von zumindest 1500% oder von zumindest 1800% oder von zumindest 2000% oder von zumindest 2200%.

Das Verwenden von expandierbaren Materialien als Vortriebselement mit solchen Expansionsraten hat den Vorteil, dass dadurch wenig Material bzw. Gewicht verwendet werden muss, um einen entsprechend notwendigen Vortrieb gewährleisten zu können.

In einer alternativen Ausführungsform umfasst das Vortriebselement eine Druckfeder.

Solche Druckfedern haben insbesondere den Vorteil, dass deren Vortrieb genau ausgewählt bzw. eingestellt werden kann. So ist es beispielsweise möglich, eine Druckfeder für ein Verstärkungselement so zu konfigurieren, dass in einem nicht erwärmten Zustand die Kraft auf das Trennelement zu gering ist, um den hoch viskosen Klebstoff aus dem Reservoir auszutragen, dass aber bei einer Erhöhung der Temperatur eine Viskosität des Klebstoffs derart abnimmt, dass die gleiche Kraft der Druckfeder ausreicht, um den nun tiefer viskosen Klebstoff aus dem Reservoir auszutragen.

Auf diese Art und Weise kann ein robustes System zur Austragung des Klebstoffs aus dem Reservoir zur Verfügung gestellt werden, welches abhängig ist von der Viskosität des Klebstoffs, welche wiederum direkt von einer Temperatur des Klebstoffs abhängt.

In einer weiteren alternativen Ausführungsform umfasst das Vortriebselement ein Formgedächtnismaterial.

Wiederum kann ein Formgedächtnismaterial so konfiguriert werden, dass bei einer bestimmten Temperatur eine Formveränderung bzw. eine Bewegung des Materials ausgelöst wird, wodurch ein Vortrieb generiert werden kann. Hier sind verschiedenste Ausführungsvarianten denkbar. Beispielsweise können Formgedächtnismaterialien verwendet werden, welche direkt durch ihre Formveränderung auf das Trennelement einwirken, oder es können beispielsweise Formgedächtnismaterialien verwendet werden, welche über einen Mechanismus auf das Trennelement einwirken. Beispielsweise kann ein Formgedächtnisdraht so mit dem Trennelement mechanisch wirkverbunden werden, dass bei einer Temperaturerhöhung der Formgedächtnisdraht sich zusammenzieht, wodurch eine Kraft auf das Trennelement ausgelöst wird.

### Klebstoff

Die nachfolgend beschriebene Klebstoffzusammensetzung ist ein beispielhafter Klebstoff, wie er im Zusammenhang dieser Erfindung verwendet werden kann.

Es wurde eine hitzehärtende einkomponentige Epoxidzusammensetzung gemäss Tabelle 1 hergestellt.

**Tabelle 1, Eingesetzte Rohstoffe.**

| **Rohstoffe** | **Gewichts-teile** |
|---|---|
| Epoxy-Flüssigharz, D.E.R. 331 (Bisphenol-A-diglycidylether), Dow | 50 |
| Polyesterpolyol, Dynacol 7380, Degussa AG, Deutschland | 5 |
| Reaktiwerdünner, Hexandiolglycidylether, Denacol EX-212, Nagase America | 1 |
| Zähigkeitsverbesserer ***D-1*** | 34 |
| Härter, Dicyandiamid | 4.78 |
| Beschleuniger, substituierter Harnstoff | 0.22 |
| Pyrogene Kieselsäure | 5 |

### Herstellung eines Zähigkeitsverbesserers ("D-1")

150 g Poly-THF 2000 (OH-Zahl 57 mg/g KOH) und 150 Liquiflex H (OH-Zahl 46 mg/g KOH) wurden 30 Minuten unter Vakuum bei 105°C getrocknet. Nachdem die Temperatur auf 90°C reduziert worden war, wurden 61.5 g IPDI und 0.14 g Dibutylzinndilaurat zugegeben. Die Reaktion wurde unter Vakuum bei 90°C bis zur Konstanz des NCO-Gehaltes bei 3.10% nach 2.0 h geführt (berechneter NCO-Gehalt: 3.15%). Anschliessend wurden 96.1 g Cardanol als Blockierungsmittel zugegeben. Es wurde bei 105°C unter Vakuum weitergerührt bis kein freies NCO mehr nachgewiesen werden konnte. Das Produkt wurde so als Zähigkeitsverbesserer D-1 verwendet. Folgende Rohstoffe wurden dazu eingesetzt:

| |
|---|
| Poly-THF 2000 (Difunktionelles Polybutylenglykol) (OH-Equivalentgewicht = ca. 1000 g/OH-Equivalent), BASF |
| Liquiflex H (Hydroxylterminertes Polybutadien) (OH-Equivalentgewicht = ca. 1230 g/OH-Equivalent), Krahn |
| Isophoron-diisocyanat (= "IPDI"), Evonik |
| Cardolite NC-700 (Cardanol, meta-substituiertes Alkenyl-mono-Phenol), Cardolite |

### Herstellung Masterbatch

Das Polyesterpolyol wurde etwa 40°C über seinem Erweichungspunkt von 77°C (ca. 100-140°C) während ca. 30 Minuten mit Epoxy-Flüssigharz vermischt bis eine klare Mischung (ca. 33 Gew.-% Polyesterpolyol bezogen auf das Gesamtgewicht des Masterbatch) entstand. Der Masterbatch wurde anschliessend auf ca. 100°C heruntergekühlt.

### Herstellung der hitzehärtenden einkomponentigen Epoxidzusammensetzung:

Die übrigen Komponenten der Epoxidzusammensetzung wurden zu einer homogenen Masse vermischt, bevorzugt bei Temperaturen von ca. 50-90°C. Sobald die Mischung homogen war wurde der Masterbatch in flüssiger Form (Temperatur Masterbatch 100°C) zugegeben und sofort vermischt.

Die Injektion der hitzehärtenden einkomponentigen Epoxidzusammensetzung erfolgte bei einer Temperatur von 60°C und bei einer Injektionsgeschwindigkeit von 50 ml/min.

In einer beispielhaften Ausführungsform ist der Klebstoff bei einer Aktivierung im Wesentlichen nicht expandierbar.

In einer alternativen Ausführungsform hat der Klebstoff bei einer Aktivierung eine Expansionsrate von -15% bis +15% oder von -10% bis +10% oder von -5% bis +5%.

Ein beispielhaftes Material eines solchen im Wesentlichen nicht-expandierbaren Klebstoffes ist unter dem Handelsnamen SikaPower^{®} erhältlich.

In einer beispielhaften Ausführungsform hat der Klebstoff nach einer Härtung ein E-Modul von zumindest 500 MPa oder von zumindest 1000 MPa oder von zumindest 1500 MPa oder von zumindest 2000 MPa.

In einer beispielhaften Ausführungsform ist der Klebstoff als spritzgussfähiges Material ausgebildet.

Dies hat den Vorteil, dass dadurch sowohl der Träger als auch der Klebstoff in einem Spritzguss-Verfahren hergestellt werden können, beispielsweise in einem ZweiKomponenten-Spritzgussverfahren.

In einer beispielhaften Ausführungsform umfasst das Verstärkungselement weiterhin ein expandierbares Element, welches auf dem Träger angeordnet ist.

In einer beispielhaften Weiterbildung ist das expandierbare Element derart angeordnet, dass durch eine Expansion des expandierbaren Elements eine Fliessbewegung des Klebstoffs eingeschränkt ist.

In einer beispielhaften Ausführungsform hat das expandierbare Element eine Expansionrate zwischen 50% und 500%, oder zwischen 100% und 400%, oder zwischen 100% und 300%.

Die Verwendung eines solchen zusätzlichen expandierbaren Elements hat den Vorteil, dass dadurch ein Bereich, in welchem der Klebstoff nach einer Austragung aus dem Reservoir ist, genauer definiert werden kann.

Geeignete Materialien für solche expandierbare Elemente werden beispielsweise unter dem Handelsnamen SikaReinforcer^{®} 941 von der Sika Corp., USA, vertrieben. Dieser Klebstoff ist beschrieben in US 6,387,470.

In einer beispielhaften Ausführungsform hat das expandierbare Element eine Expansionsrate von zumindest 500% oder von zumindest 1000% oder von zumindest 1500% oder von zumindest 2000%.

Zudem wird hier ein System vorgeschlagen, welches ein Strukturelement mit einem Hohlraum und ein Verstärkungselement gemäss obiger Beschreibung umfasst, wobei das Verstärkungselement im Hohlraum des Strukturelements angeordnet ist.

Einzelheiten und Vorteile der Erfindung werden im Folgenden anhand von Ausführungsbeispielen und mit Bezug auf schematische Zeichnungen beschrieben. Es zeigen:
- Fig. 1: eine beispielhafte Darstellung einer Karosserie;
- Fig. 2: eine beispielhafte Darstellung eines Verstärkungselements in einem Strukturelement gemäss Stand der Technik;
- Fig. 3a bis 3e: schematische Darstellungen eines beispielhaften Verstärkungselements;
- Fig. 4a und 4b: schematische Darstellungen eines beispielhaften Systems eines verstärkten Strukturelements;
- Fig. 5a bis 5d: schematische Darstellungen eines beispielhaften Systems eines verstärkten Verstärkungselements; und
- Fig. 6a bis 6d: schematische Darstellungen eines beispielhaften Systems eines verstärkten Strukturelements.

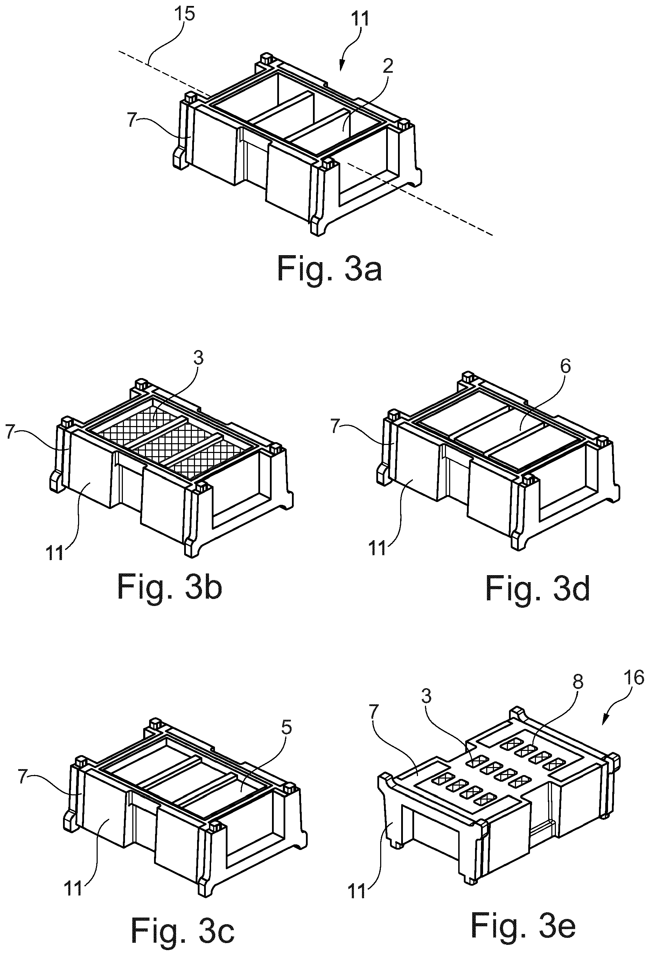

In den Fig. 3a bis 4d ist eine erste Ausführungsvariante eines Verstärkungselements 16 bzw. eines Systems 1 eines verstärkten Strukturelements 12, 14 dargestellt. In diesem Ausführungsbeispiel wird als Vortriebselement 6 ein expandierbares Material eingesetzt.

In Fig. 3a ist zunächst der Träger 11 dargestellt. In diesem Beispiel hat der Träger 11 drei Reservoire 2, welche nebeneinander entlang einer Längsachse 15 des Trägers 11 angeordnet sind. Zudem ist auf dem Träger 11 ein expandierbares Element 7 angeordnet.

In Fig. 3b ist nun derselbe Träger 11 dargestellt, wobei nun die Reservoire 2 mit Klebstoff 3 befüllt sind.

In der Fig. 3c ist auf jedem mit Klebstoff 3 befüllten Reservoir 2 ein Trennelement 5 angeordnet.

In Fig. 3d ist auf den Trennelementen 5 das Vortriebselement 6 angeordnet, welches in diesem Ausführungsbeispiel expandierbares Material umfasst. In dieser Ausführungsvariante ist das expandierbare Material flächig über alle drei Reservoire 2 verteilt.

In Fig. 3e ist dasselbe Verstärkungselement 16 wie in Fig. 3d dargestellt, jedoch aus einem anderen Blickwinkel. In dieser Darstellung sind die Auslassöffnungen 8 der Reservoire 2 sichtbar. Die Auslassöffnungen 8 befinden sich jeweils im Wesentlichen gegenüber den Trennelementen 5, so dass durch eine Bewegung der Trennelemente 5 durch die Reservoire 2 der Klebstoff 3 durch die Auslassöffnungen 8 ausgetragen werden kann.

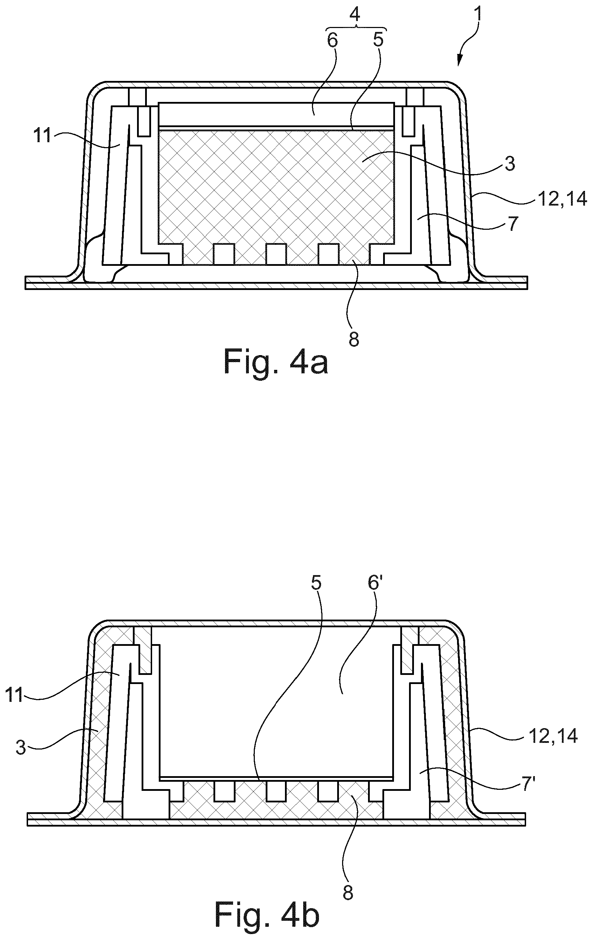

In den Fig. 4a und 4b ist das Verstärkungselement 16 gemäss den Figuren 3d und 3e in einem Strukturelement 12, 14 angeordnet. Dabei ist in den Fig. 4a und 4b das System 1 in einer Schnittdarstellung gezeigt. Die Fig. 4a zeigt das System 1 in einem Zustand vor einer Aktivierung des Vortriebselements, und die Fig. 4b zeigt das System 1' nach einer Aktivierung des Vortriebselements 6, also mit dem aktivierten Vortriebselement 6'. Das Trennelement 5 und das Vortriebselement 6 bilden zusammen das Austragselement 4.

Auf diesen beiden Darstellungen der Fig. 4a und 4b ist zu erkennen, wie der Klebstoff 3 durch das Austragselement aus dem Reservoir 2 ausgetragen wird, indem das Vortriebselement 6 aktiviert wird und das Trennelement 5 durch das Reservoir 2 bewegt, so dass der Klebstoff 3 aus den Auslassöffnungen 8 ausgetragen wird und in einen Bereich zwischen den Träger 11 und das Strukturelement 12, 14 gebracht wird, wo der Klebstoff 3 das Verstärkungselement 16 mit dem Strukturelement 12, 14 verkleben kann.

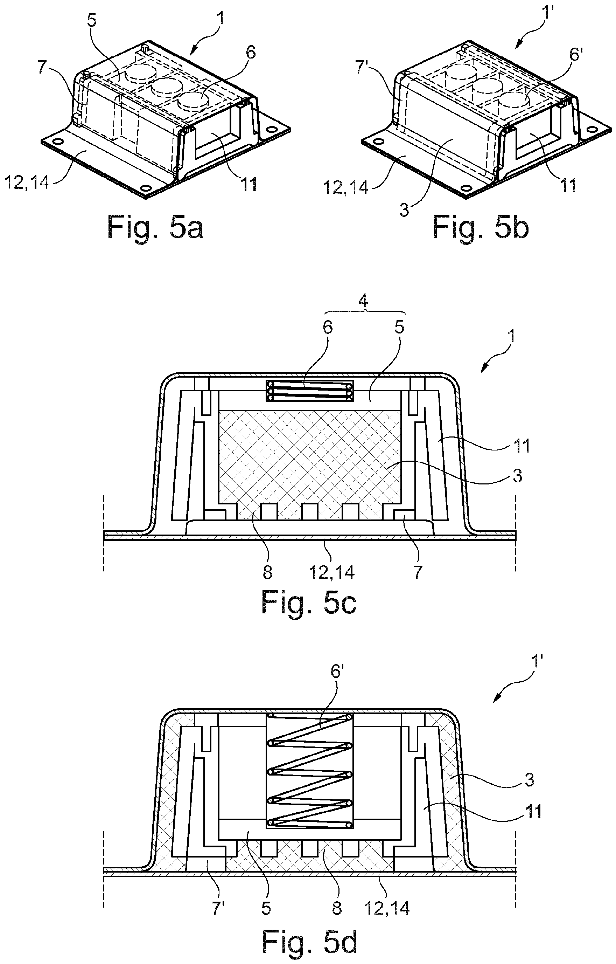

In den Fig. 5a bis 5d ist ein weiteres Ausführungsbeispiel eines Systems 1 mit einem Verstärkungselement 16 in einem Strukturelement 12, 14 dargestellt. Im Unterschied zum Ausführungsbeispiel gemäss den Fig. 3a bis 4d umfasst das Vortriebselement 6 in diesem Ausführungsbeispiel Druckfedern.

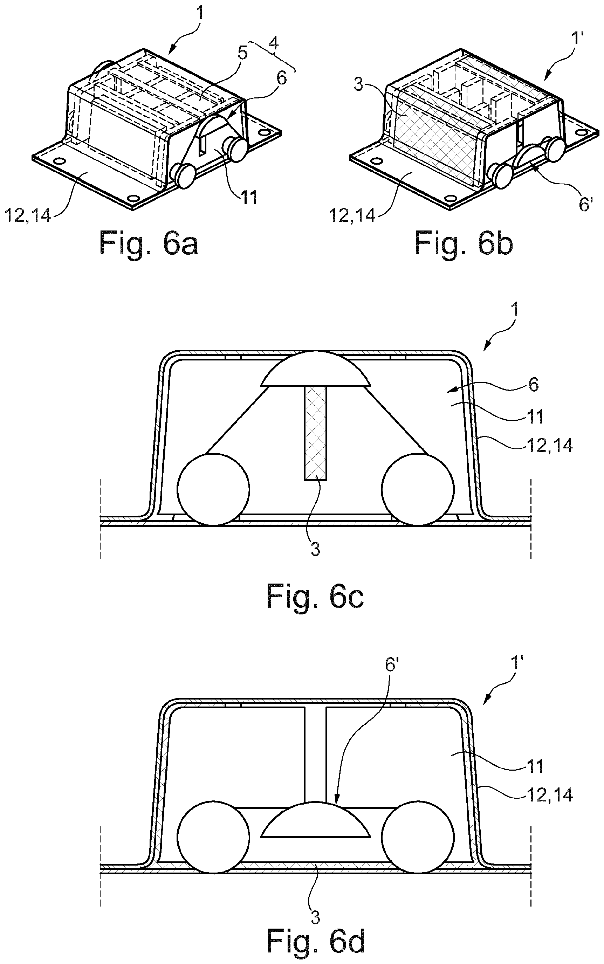

In den Fig. 6a bis 6d ist ein weiteres alternatives Ausführungsbeispiel eines Systems 1 bzw. eines Verstärkungselements 16 in einem Strukturelement 12, 14 dargestellt. In diesem Ausführungsbeispiel umfasst das Vortriebselement 6 ein Formgedächtnismaterial.

In diesem konkreten Ausführungsbeispiel ist das Formgedächtnismaterial als Formgedächtnisdraht ausgebildet, welcher über einen beweglichen Bügel gespannt ist. Wird nun die Temperatur erhöht, so verkürzt sich der Formgedächtnisdraht, wodurch der Bügel nach unten bewegt wird. Durch die Bewegung des Bügels werden auch die Trennelemente 5 nach unten bewegt, so dass sie eine Bewegung durch das Reservoir ausführen und dadurch den Klebstoff 3 aus dem Reservoir 2 austragen.

### Bezugszeichenliste

- 1: System
- 2: Reservoir
- 3: Klebstoff
- 4: Austragselement
- 5: Trennelement
- 6: Vortriebselement
- 7: expandierbares Element
- 8: Auslassöffnung
- 10: Karosserie
- 11: Träger
- 12: Strukturelement
- 13: expandierbarer Klebstoff
- 14: Strukturelement
- 15: Längsachse
- 16: Verstärkungselement

## Patentansprüche

1. Verstärkungselement (16) zur Verstärkung von Strukturelementen (12, 14) in Fahrzeugen, das Verstärkungselement (16) umfassend:
einen Träger (11) mit zumindest einem Reservoir (2), wobei das Reservoir (2) zumindest eine Auslassöffnung (8) hat;
einen Klebstoff (3), welcher im Reservoir (2) angeordnet ist; und
zumindest ein Austragselement (4) mit einem Trennelement (5) und einem Vortriebselement (6), wobei das Trennelement (5) im Reservoir (2) angeordnet ist und den Klebstoff (3) vom Vortriebselement (6) trennt, und wobei das Trennelement (5) im Wesentlichen gegenüber der Auslassöffnung (8) angeordnet ist;
wobei bei einer Betätigung des Vortriebselements (6) das Trennelement (5) durch das Reservoir (2) bewegt wird, so dass der Klebstoff (3) durch die Auslassöffnung (8) aus dem Reservoir (2) ausgetragen wird.

2. Verstärkungselement (16) nach Anspruch 1, wobei das Reservoir (2) in einem Inneren des Trägers (11) angeordnet ist, und/oder wobei eine Bewegungsrichtung des Trennelements (5) orthogonal zu einer Längsachse (15) des Trägers (11) verläuft.

3. Verstärkungselement (16) nach einem der vorhergehenden Ansprüche, wobei das Reservoir (2) entlang der Bewegungsrichtung des Trennelements (5) einen im Wesentlichen konstanten Querschnitt hat.

4. Verstärkungselement (16) nach Anspruch 3, wobei der konstante Querschnitt des Reservoirs (2) viereckig oder rechteckig oder vieleckig oder oval oder rund oder unregelmässig geformt ist.

5. Verstärkungselement (16) nach einem der vorhergehenden Ansprüche, wobei das Trennelement (5) flexibel ist, und/oder wobei das Trennelement (5) als Folie ausgebildet ist.

6. Verstärkungselement (16) nach einem der vorhergehenden Ansprüche, wobei das Trennelement (5) starr ist, und/oder wobei das Trennelement (5) aus Kunststoff ausgebildet ist, und/oder wobei das Trennelement (5) im Wesentlichen flach ist.

7. Verstärkungselement (16) nach einem der vorhergehenden Ansprüche, wobei das Vortriebselement (6) expandierbares Material umfasst.

8. Verstärkungselement (16) nach Anspruch 7, wobei das expandierbare Material eine Expansionsrate von zumindest 500% oder von zumindest 1000% oder von zumindest 1500% oder von zumindest 2000% hat.

9. Verstärkungselement (16) nach einem der Ansprüche 1 bis 6, wobei das Vortriebselement (6) eine Druckfeder umfasst.

10. Verstärkungselement (16) nach einem der Ansprüche 1 bis 6, wobei das Vortriebselement (6) ein Formgedächtnismaterial umfasst.

11. Verstärkungselement (16) nach einem der vorhergehenden Ansprüche, wobei der Klebstoff (3) bei einer Aktivierung im Wesentlichen nicht expandierbar ist und/oder eine Expansionsrate von -5% bis +5% hat.

12. Verstärkungselement (16) nach einem der vorhergehenden Ansprüche, wobei der Klebstoff als spritzgussfähiges Material ausgebildet ist.

13. Verstärkungselement (16) nach einem der vorhergehenden Ansprüche, wobei das Verstärkungselement (16) weiterhin zumindest ein expandierbares Element (7) umfasst, welches auf dem Träger (11) angeordnet ist.

14. Verstärkungselement (16) nach Anspruch 13, wobei das expandierbare Element (7) derart angeordnet ist, dass durch eine Expansion des expandierbaren Elements (7) eine Fliessbewegung des Klebstoffs (3) eingeschränkt ist.

15. System (1) eines verstärkten Strukturelements (12, 14), umfassend
ein Strukturelement (12, 14) mit einem Hohlraum; und
ein Verstärkungselement (16) nach einem der vorhergehenden Ansprüche;
wobei das Verstärkungselement (16) im Hohlraum des Strukturelements (12, 14) angeordnet ist.

## Claims

1. Reinforcing element (16) for reinforcing structural elements (12, 14) in vehicles, said reinforcing element (16) comprising:
a support (11) having at least one reservoir (2), wherein the reservoir (2) has at least one outlet opening (8);
an adhesive (3), which is arranged in the reservoir (2); and
at least one dispensing element (4) having a separating element (5) and a propulsion element (6), wherein the separating element (5) is arranged in the reservoir (2) and separates the adhesive (3) from the propulsion element (6), and wherein the separating element (5) is arranged substantially opposite the outlet opening (8);
wherein, when the propulsion element (6) is actuated, the separating element (5) is moved through the reservoir (2), with the result that the adhesive (3) is dispensed from the reservoir (2) through the outlet opening (8).

2. Reinforcing element (16) according to Claim 1, wherein the reservoir (2) is arranged in an interior of the support (11), and/or wherein a direction of movement of the separating element (5) is orthogonal with respect to a longitudinal axis (15) of the support (11).

3. Reinforcing element (16) according to any one of the preceding claims, wherein the reservoir (2) has a substantially constant cross section along the direction of movement of the separating element (5).

4. Reinforcing element 16) according to Claim 3, wherein the constant cross section of the reservoir (2) is square or rectangular or polygonal or oval or round or irregularly shaped.

5. Reinforcing element (16) according to any one of the preceding claims, wherein the separating element (5) is flexible, and/or wherein the separating element (5) is designed as a film.

6. Reinforcing element (16) according to any one of the preceding claims, wherein the separating element (5) is rigid, and/or wherein the separating element (5) is formed from plastic, and/or wherein the separating element (5) is substantially flat.

7. Reinforcing element (16) according to any one of the preceding claims, wherein the propulsion element (6) comprises expandable material.

8. Reinforcing element (16) according to Claim 7, wherein the expandable material has an expansion rate of at least 500% or of at least 1000% or of at least 1500% or of at least 2000%.

9. Reinforcing element (16) according to any one of Claims 1 to 6, wherein the propulsion element (6) comprises a compression spring.

10. Reinforcing element (16) according to any one of Claims 1 to 6, wherein the propulsion element (6) comprises a shape memory material.

11. Reinforcing element (16) according to any one of the preceding claims, wherein the adhesive (3) when activated is substantially non-expandable and/or has an expansion rate of -5% to +5%.

12. Reinforcing element (16) according to any one of the preceding claims, wherein the adhesive is configured as injection-mouldable material.

13. Reinforcing element (16) according to any one of the preceding claims, wherein the reinforcing element (16) furthermore comprises at least one expandable element (7), which is arranged on the support (11).

14. Reinforcing element (16) according to Claim 13, wherein the expandable element (7) is arranged in such a way that a flowing motion of the adhesive (3) is restricted by expansion of the expandable element (7).

15. System (1) of a reinforced structural element (12, 14) comprising
a structural element (12, 14) having a cavity; and
a reinforcing element (16) according to any one of the preceding claims;
wherein the reinforcing element (16) is arranged in the cavity of the structural element (12, 14).

## Revendications

1. Élément de renforcement (16) pour le renforcement d'éléments structuraux (12, 14) dans des véhicules, l'élément de renforcement (16) comprenant :
un support (11) muni d'au moins un réservoir (2), le réservoir (2) ayant au moins une ouverture de sortie (8) ;
un adhésif (3), qui est agencé dans le réservoir (2) ; et
au moins un élément de déchargement (4) muni d'un élément de séparation (5) et d'un élément d'avancement (6), l'élément de séparation (5) étant agencé dans le réservoir (2) et séparant l'adhésif (3) de l'élément d'avancement (6), et l'élément de séparation (5) étant agencé essentiellement en vis-à-vis de l'ouverture de sortie (8) ;
dans lequel, lors d'un actionnement de l'élément d'avancement (6), l'élément de séparation (5) est déplacé à travers le réservoir (2) de telle sorte que l'adhésif (3) est déchargé du réservoir (2) par l'ouverture de sortie (8).

2. Élément de renforcement (16) selon la revendication 1, dans lequel le réservoir (2) est agencé à l'intérieur du support (11), et/ou dans lequel une direction de déplacement de l'élément de séparation (5) est orthogonale à un axe longitudinal (15) du support (11).

3. Élément de renforcement (16) selon l'une quelconque des revendications précédentes, dans lequel le réservoir (2) a une section transversale essentiellement constante le long de la direction de déplacement de l'élément de séparation (5).

4. Élément de renforcement (16) selon la revendication 3, dans lequel la section transversale constante du réservoir (2) est de forme carrée ou rectangulaire ou polygonale ou ovale ou ronde ou irrégulière.

5. Élément de renforcement (16) selon l'une quelconque des revendications précédentes, dans lequel l'élément de séparation (5) est flexible, et/ou dans lequel l'élément de séparation (5) est configuré sous forme de feuille.

6. Élément de renforcement (16) selon l'une quelconque des revendications précédentes, dans lequel l'élément de séparation (5) est rigide, et/ou dans lequel l'élément de séparation (5) est configuré en matière plastique, et/ou dans lequel l'élément de séparation (5) est essentiellement plat.

7. Élément de renforcement (16) selon l'une quelconque des revendications précédentes, dans lequel l'élément d'avancement (6) comprend un matériau expansible.

8. Élément de renforcement (16) selon la revendication 7, dans lequel le matériau expansible a un taux d'expansion d'au moins 500 % ou d'au moins 1 000 % ou d'au moins 1 500 % ou d'au moins 2 000 %.

9. Élément de renforcement (16) selon l'une quelconque des revendications 1 à 6, dans lequel l'élément d'avancement (6) comprend un ressort de compression.

10. Élément de renforcement (16) selon l'une quelconque des revendications 1 à 6, dans lequel l'élément d'avancement (6) comprend un matériau à mémoire de forme.

11. Élément de renforcement (16) selon l'une quelconque des revendications précédentes, dans lequel l'adhésif (3) est essentiellement non expansible lors d'une activation et/ou a un taux d'expansion de -5 % à +5 %.

12. Élément de renforcement (16) selon l'une quelconque des revendications précédentes, dans lequel l'adhésif est configuré sous forme de matériau apte à être moulé par injection.

13. Élément de renforcement (16) selon l'une quelconque des revendications précédentes, dans lequel l'élément de renforcement (16) comprend en outre au moins un élément expansible (7), qui est agencé sur le support (11).

14. Élément de renforcement (16) selon la revendication 13, dans lequel l'élément expansible (7) est agencé de telle sorte qu'un mouvement d'écoulement de l'adhésif (3) est restreint par une expansion de l'élément expansible (7).

15. Système (1) d'un élément structural renforcé (12, 14), comprenant :
un élément structural (12, 14) muni d'une cavité ; et
un élément de renforcement (16) selon l'une quelconque des revendications précédentes ;
dans lequel l'élément de renforcement (16) est agencé dans la cavité de l'élément structural (12, 14).
